# FASCICULE DE BREVET EUROPEEN

(11) **EP 3 004 511 B1**
(45) Date de publication et mention de la délivrance du brevet: **26.07.2017**
(21) Numéro de dépôt: 14728207.3
(22) Date de dépôt: 06.06.2014
(51) Int. Cl.: E06B 9/72, E06B 9/68

(54) **DÉTECTION DE LA POSITION D'UN TAMBOUR D'ENROULEMENT ACCOUPLÉ À UN MOTEUR PAR L'INTERMÉDIAIRE D'UN ÉLÉMENT SOUPLE AMORTISSEUR**
ERFASSUNG DER POSITION EINER AN EINEN MOTOR GEKOPPELTEN WICKELTROMMEL ÜBER EIN FLEXIBLES DÄMPFUNGSELEMENT
DETECTION OF THE POSITION OF A WINDING DRUM COUPLED TO A MOTOR VIA A DAMPING FLEXIBLE ELEMENT

(30) Priorité: 06.06.2013 FR 1355237
(43) Date de publication de la demande: 13.04.2016
(73) Titulaire: Somfy SAS, 74300 Cluses (FR)
(72) Inventeur: LAGARDE, Eric, F-74700 Sallanches (FR); GEORGEAULT, Ronan, F-74300 Cluses (FR); MONTÉREMAND, Laurent, F-74800 La Roche sur Foron (FR); BLANC, Serge, F-74800 Saint Sixt (FR); RAMOS, Joël, F-74380 Nangy (FR)
(74) Mandataire: Bugnion Genève
(86) Numéro de dépôt international: PCT/EP2014/061775
(87) Numéro de publication internationale: WO 2014/195439

(56) Documents cités:
- DE-B3- 10 239 788

## Description

### DOMAINE TECHNIQUE DE L'INVENTION

L'invention se rapporte à un appareillage motorisé d'enroulement d'un écran, et notamment d'un écran domotique d'occultation partielle ou total d'une ouverture dans un bâtiment, d'un écran de cloisonnement ou de projection, d'un écran de protection solaire à déroulement vertical ou oblique, ou encore d'une grille anti-intrusion ou d'un volet roulant.

### ÉTAT DE LA TECHNIQUE ANTÉRIEURE

Dans le document WO 2005/090736 est présenté un appareillage d'enroulement motorisé équipé d'éléments souples amortisseurs permettant un certain découplage vibratoire entre l'ensemble moteur et son environnement, de manière à minimiser les vibrations et le bruit perceptibles par l'utilisateur. Il est ainsi proposé d'interposer un élément souple amortisseur tournant entre l'arbre de sortie de l'ensemble moteur et un tambour d'enroulement de l'écran. Il est également proposé d'interposer un élément souple amortisseur fixe entre le carter de l'ensemble moteur et un support fixe.

Il s'avère que dans certaines circonstances, l'interposition d'un élément souple amortisseur tournant ou stationnaire peut engendrer une incertitude sur le positionnement angulaire du tambour entraîné par le moteur, par exemple du fait d'un fluage de l'élément souple amortisseur, ou d'une variation du couple résistant statique.

Indépendamment de la présence éventuelle d'éléments souples amortisseurs, des phénomènes similaires peuvent se rencontrer du fait du vieillissement de certains composants de l'actionneur, par exemple dans un étage réducteur interposé entre le moteur et le tambour. D'autres dérives peuvent être liées aux dilatations thermiques différentielles des composants de l'actionneur.

Lorsque l'on utilise un capteur de rotation lié au moteur, notamment un capteur de rotation du rotor, ou partie tournante, du moteur, pour détecter certaines position remarquables de l'écran telles que divulguées dans DE 102 39 788B3, et notamment des positions de fin de course, l'incertitude évoquée précédemment peut engendrer une imprécision dans le pilotage de l'appareillage, se traduisant par exemple par un mauvais positionnement de l'écran en fin de course. Un positionnement précis est en effet requis notamment pour des écrans de protection solaire sur une façade, ceux-ci devant conserver des barres de charge parfaitement alignées en positions extrêmes ou intermédiaires.

On peut naturellement faire appel à un capteur spécifique, positionné par exemple entre le tambour de l'écran et un support fixe, pour mesurer avec précision le positionnement angulaire du tambour dans un repère fixe. Mais le coût d'une telle instrumentation supplémentaire de l'appareillage est élevé si l'on souhaite obtenir un niveau de précision satisfaisant, de l'ordre de +/- 3 à 5°. En effet, la vitesse de rotation du tambour étant largement moins élevée que la vitesse de sortie du moteur, il faudra prévoir une précision de positionnement angulaire beaucoup plus importante.

Il existe donc un besoin de perfectionner le pilotage d'un appareillage d'enroulement motorisé du type précédent, de manière à diminuer les erreurs de positionnement, le tout par des moyens simples, robustes et peu coûteux.

### EXPOSÉ DE L'INVENTION

L'invention vise à remédier aux inconvénients de l'état de la technique. Pour ce faire est proposé, suivant un premier aspect de l'invention, un appareillage d'enroulement d'un écran, comportant
- un tambour d'enroulement de l'écran, tournant autour d'un axe de rotation par rapport à un référentiel fixe sur plus d'un tour entre au moins une première position de fin de course et une deuxième position de fin de course ;
- un ensemble moteur comprenant un moteur muni d'un stator destiné à être fixé à un support fixe et un rotor lié cinématiquement au tambour d'enroulement ; et
- un premier ensemble de mesure comportant un premier codeur solidaire du rotor et un premier capteur pour lire le premier codeur et générer un premier signal de comptage lorsque le premier codeur tourne ; et des premiers moyens de traitement pour générer en fonction du premier signal de comptage un premier signal indicatif de la position de l'écran monotone lorsque le tambour passe de la première position de fin de course à la deuxième position de fin de course ;
- un deuxième ensemble de mesure pour détecter au moins une position indexée du tambour par tour de tambour dans le référentiel fixe,
- une mémoire d'étalonnage pour mémoriser au moins une première valeur d'étalonnage du premier signal indicatif de la position de l'écran dans la position indexée du tambour ; et
- un comparateur pour délivrer au moins une première comparaison algébrique quantitative entre une valeur courante du premier signal indicatif de la position de l'écran mesurée au passage par la position indexée durant une phase d'observation et la première valeur d'étalonnage.

Le comparateur fournit une indication d'un éventuel décalage entre rotor et tambour par des moyens peu exigeants en ressources de calcul et de mesure.

On allie ainsi un premier ensemble de mesure relativement précis pour la détection de la rotation du moteur, et un deuxième ensemble de mesure qui peut être particulièrement simple, puisque sa fonction est simplement de générer une ou plusieurs références par tour du tambour.

Le principe de mesure retenu pour le premier ensemble de mesure peut être quelconque, et mettre en oeuvre par exemple un codeur tournant avec le rotor, par exemple un codeur magnétique disposé à distance d'entrefer d'un capteur magnétique, et notamment une sonde à effet Hall ou une ampoule Reed, ou bien un codeur optique disposé en face d'une source lumineuse et d'une cellule photosensible, ou bien encore une roue phonique positionnée en face d'un capteur capacitif. Le codeur peut également être constitué par les pôles du rotor du moteur. De préférence, le capteur est un ensemble de deux détecteurs de même type, de sorte que le premier ensemble de mesure est capable de discriminer également le sens de rotation du rotor. Le signal image de la rotation du rotor est un signal monotone, c'est-à-dire un signal représenté par une fonction croissante ou décroissante sur l'ensemble de l'intervalle considéré entre les positions de fin de course. En pratique, dans l'hypothèse ou le signal délivré par le premier capteur est analogique, les premiers moyens de traitement peuvent comprendre un pré-conditionnement de ce signal analogique pour former un signal binaire constitué d'une suite d'impulsions. Ces impulsions sont dirigées vers un compteur d'impulsions, pour faire un comptage algébrique des impulsions observées, affectées d'un signe dépendant de la direction de rotation du rotor, celle-ci pouvant être détectée par le premier capteur ou par un détecteur indépendant. Le nombre de pôles ou changements d'états par tour de rotor peut être quelconque, mais de préférence relativement élevé, par exemple supérieur à 8 ou 16, pour obtenir une résolution spatiale suffisante.

Le principe de mesure retenu pour le deuxième ensemble de mesure peut être ou non identique à celui du premier ensemble de mesure, et mettre en oeuvre par exemple l'un ou l'autre des dispositifs magnétiques, optiques ou capacitifs évoqués précédemment. On peut également envisager une came actionnant un contact à chaque tour. Dans les deux cas, un ensemble de mesure sans contact sera préféré, notamment pour éviter d'interagir mécaniquement avec les parties en rotation et dans le cas du deuxième ensemble de mesure, pour permettre une lecture de l'information au travers de la paroi d'un tube formant le boîtier de l'actionneur.

Suivant un mode de réalisation, le deuxième ensemble de mesure comporte un deuxième codeur solidaire du tambour un deuxième capteur fixe dans le référentiel fixe pour lire le deuxième codeur, et des deuxièmes moyens de traitement pour générer un deuxième signal représentatif d'un passage par la position indexée lorsque le deuxième codeur tourne avec le tambour. Le deuxième signal sert à la détection de la position indexée. Les deuxièmes moyens de traitement peuvent par exemple comprendre un compteur qui compte des impulsions émises par le capteur au passage du codeur. Dans une version particulièrement simple, il est possible de se dispenser de comptage, si l'on considère que la variation potentielle de position angulaire de l'arbre de sortie pour une position angulaire donnée du rouleau est inférieure à la moitié de la résolution angulaire du deuxième capteur. Dans ce cas en effet, chaque passage par la position d'indexation correspond à une plage de valeurs unique du premier signal indicatif de la position de l'écran.

Suivant un mode de réalisation, le deuxième codeur présente au plus huit singularités, et de préférence une singularité unique, lisible par le deuxième capteur à chaque tour de tambour. Une singularité unique est suffisante pour une indexation par tour. Le codeur peut alors être particulièrement simple. Si on choisit d'indexer la position plusieurs fois par tour, chaque position d'indexation ou au moins l'une d'entre elles est de préférence repérée de manière unique. Le deuxième ensemble de mesure fonctionne ainsi sans contact au travers de la paroi du tube de l'actionneur.

Suivant un mode de réalisation, le tambour est guidé par rapport au support fixe par l'intermédiaire d'au moins un palier de guidage, le deuxième codeur étant disposé sur une pièce tournante du palier. Le montage s'en trouve simplifié.

Suivant un mode de réalisation particulièrement avantageux, l'ensemble moteur comporte au moins un réducteur de vitesse entre le rotor et le tambour. Dans ce cas en effet, le facteur de démultiplication est également un facteur d'augmentation de la résolution du premier ensemble de mesure dans son utilisation pour mesurer la position du tambour.

Comme on l'a indiqué précédemment, l'invention trouve à s'appliquer en particulier lorsque l'on prévoit des éléments souples amortisseurs destinés à isoler l'ensemble moteur sur le plan vibratoire et/ou acoustique. On peut notamment prévoir que l'appareillage comporte au moins un amortisseur de vibration tournant disposé entre le rotor et le tambour. Si l'appareillage comporte un réducteur de vitesse interposé entre le moteur et le tambour, on aura avantage à disposer au moins un élément souple amortisseur entre le réducteur de vitesse et le tambour, pour amortir les vibrations engendrées par le réducteur. On peut également prévoir, le cas échéant en combinaison avec l'amortisseur tournant, au moins un amortisseur de vibration fixe disposé entre le stator et le support fixe.

Suivant un mode de réalisation préféré, l'ensemble moteur comporte un carter logé dans un tube monté fixe sur le support fixe. Le carter et/ou le tube peuvent avoir des fonctions d'isolation acoustique. Le tube peut comporter un palier de guidage de l'arbre de sortie du moteur.

Suivant un mode de réalisation préféré le deuxième ensemble de mesure comprend un capteur bipolaire et le deuxième codeur détermine un changement de polarité.

Suivant un mode de réalisation, le comparateur comporte des moyens pour générer une valeur de décalage fonction au moins de la première comparaison algébrique. De préférence l'appareillage comporte en outre un contrôleur pour piloter le moteur dans une phase ultérieure en fonction au moins d'une valeur courante du premier signal indicatif de la position de l'écran mesurée dans la phase ultérieure et de la valeur de décalage. Le contrôleur exploite l'information de décalage pour corriger son estimation de la position du tambour. Ainsi, si lors d'une phase de pilotage postérieure à la phase d'observation, le contrôleur reçoit une consigne de positionnement du tambour dans une position donnée, sous forme d'une consigne de positionnement du rotor du moteur dans une position supposée correspondante, il corrige la consigne de positionnement de l'arbre de sortie en utilisant la valeur de décalage déterminée durant la phase d'observation.

En pratique, la mémoire d'étalonnage mémorise autant de valeurs d'étalonnage qu'il y a de passage du tambour par la position indexée entre la première position de fin de course et la deuxième position de fin de course, par exemple haute et basse, de l'écran. Préférentiellement, le comparateur génère la valeur de décalage en fonction de plusieurs comparaisons algébriques entre plusieurs valeurs courantes du premier signal indicatif de la position de l'écran mesurées au passage par la position indexée dans une phase d'observation et plusieurs valeurs d'étalonnage mémorisées dans la mémoire d'étalonnage. On peut notamment déterminer la valeur de décalage en effectuant une moyenne algébrique des différences algébriques constatées entre valeurs courantes et valeurs d'étalonnage.

Suivant un autre aspect de l'invention, celle-ci a trait à un procédé de commande d'un appareillage d'enroulement d'un écran, comportant un tambour d'enroulement de l'écran, entraîné par un rotor d'un moteur, le procédé étant caractérisé par les étapes suivantes :
- dans une phase d'étalonnage, on mémorise au moins une valeur d'étalonnage d'un angle de rotation correspondant à une position indexée du tambour ;
- dans une phase d'observation, on entraîne le tambour en rotation à l'aide du moteur en mesurant une valeur courante de l'angle de rotation du rotor du moteur et en détectant le passage du tambour par la position indexée, et on effectue au moins une comparaison quantitative entre la valeur courante lorsque le tambour passe par la position indexée et la valeur d'étalonnage.

Suivant un mode de réalisation particulièrement avantageux, on entraîne dans la phase d'étalonnage le tambour avec le moteur entre une première position de fin de course et une deuxième position de fin de course dans un sens de rotation de référence et on mémorise autant de valeurs d'étalonnage qu'il y a de passages du tambour par la position indexée. On obtient ainsi un domaine d'observation important. Avantageusement, on entraîne dans la phase d'observation le tambour en rotation dans le sens de référence, et on effectue autant de comparaisons quantitatives entre la valeur courante lorsque le tambour passe par la position indexée et la valeur d'étalonnage qu'il y a de passage du tambour par la position indexée. La phase d'observation peut être faite sur tout ou partie de la course entre la première position de fin de course et la deuxième position de fin de course.

On peut mettre à profit les comparaisons effectuées pour déterminer une valeur de décalage sur un tour ou plus d'un tour de rotation du tambour, en fonction de plusieurs desdites comparaisons. On dispose ainsi de plusieurs couples de valeurs à comparer, au moins une par tour, pour former la valeur de décalage. On peut ainsi par exemple faire la moyenne des décalages observés pour chaque tour.

Suivant un mode de réalisation, une nouvelle valeur de position du moteur est déterminée à chaque passage par une position indexée en fonction d'une valeur courante du premier signal indicatif de la position de l'écran mesurée et de la valeur de décalage déterminée dans la phase d'observation pour une ou plusieurs positions indexées.

Il est prévu par ailleurs de pouvoir combiner entre elles les caractéristiques des différents modes de réalisation pour former d'autres variantes.

### BRÈVE DESCRIPTION DES FIGURES

D'autres caractéristiques et avantages de l'invention ressortiront à la lecture de la description qui suit, en référence aux figures annexées, qui illustrent :
- la figure 1, un appareillage d'enroulement d'un écran selon un mode de réalisation de l'invention ;
- la figure 2, un circuit de commande de l'appareillage de la figure 1 ;
- la figure 3, un schéma illustrant le traitement du signal effectué.

Pour plus de clarté, les éléments identiques seront repérés par des signes de référence identiques sur l'ensemble des figures.

### DESCRIPTION DÉTAILLÉE DE MODES DE RÉALISATION

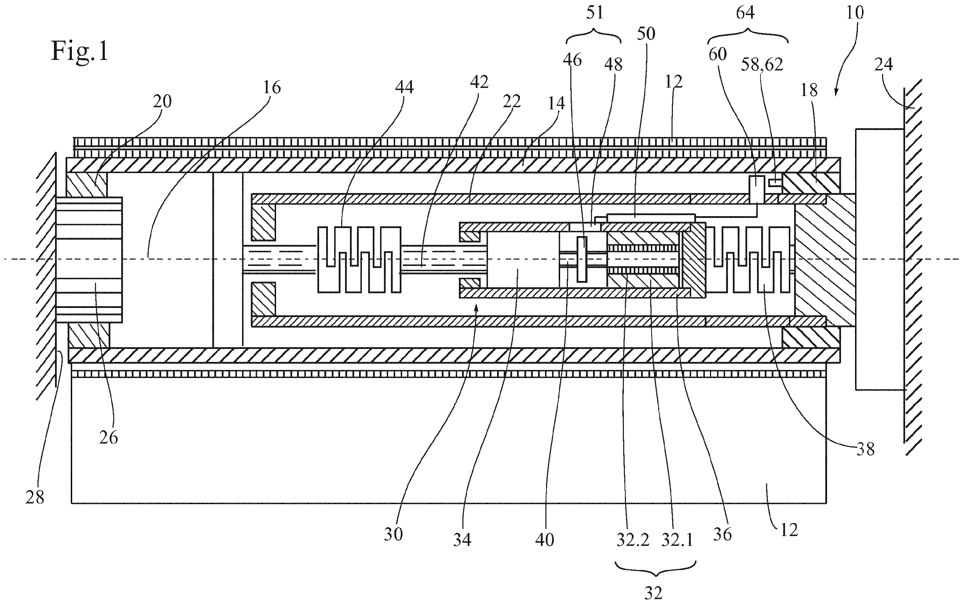

Sur la figure **1** a été illustré un appareillage motorisé **10** d'enroulement d'un écran, par exemple un volet roulant **12.** Cet appareillage est constitué d'un tambour d'enroulement **14** guidé en rotation autour d'un axe géométrique fixe **16** par l'intermédiaire d'un ou plusieurs paliers **18, 20,** qui peuvent être lisses ou à roulement, et qui s'interposent entre le tambour **14** et un ensemble de fixation qui, dans l'exemple, est constitué d'un tube fixe **22** fretté sur un support fixe **23** solidaire d'un premier mur **24** et supportant le palier **18,** et d'un support indépendant **26** fixé à un deuxième mur **28** et supportant le palier **20.**

A l'intérieur du tube fixe **22** est logé un ensemble moteur **30** constitué d'un moteur **32** et d'un réducteur **34** à un ou plusieurs étages de réduction de vitesse, disposés dans un carter tubulaire commun **36.** Le carter **36,** sans contact avec le tube fixe **22,** est fixé au support fixe **23** par l'intermédiaire d'un élément souple amortisseur fixe **38,** qui peut être réalisé en caoutchouc, en matière plastique ou élastomère ou d'autres matériaux présentant une bonne élasticité et un taux d'amortissement viscoélastique élevé, notamment en torsion. Alternativement, l'élément souple amortisseur peut être réalisé par le biais de découpes appropriées, ainsi que représenté en exemple sur la figure 1. L'ensemble moteur **32** comporte un stator **32.1** et un rotor **32.2** solidaire d'un arbre de sortie **40** qui attaque le réducteur **34.** Ce dernier présente un organe de sortie **42,** par exemple une couronne, un porte satellite ou, comme illustré sur la figure, un arbre, qui est relié au tambour d'enroulement **14** par l'intermédiaire d'un élément souple amortisseur rotatif **44.** Suivant des variantes non représentées, on peut placer un élément souple amortisseur rotatif à d'autres endroits dans la chaîne cinématique de transmission reliant l'arbre de sortie **40** au tambour **14,** par exemple entre l'arbre de sortie **40** et le réducteur **34.** Le carter **36** est un tube massique et rigide, ayant une fonction de maintien du moteur **32** et le réducteur **34.** Il peut cependant être équipé d'éléments d'amortissement, par exemple être entouré de joints toriques pour sa suspension dans le tube de l'actionneur.

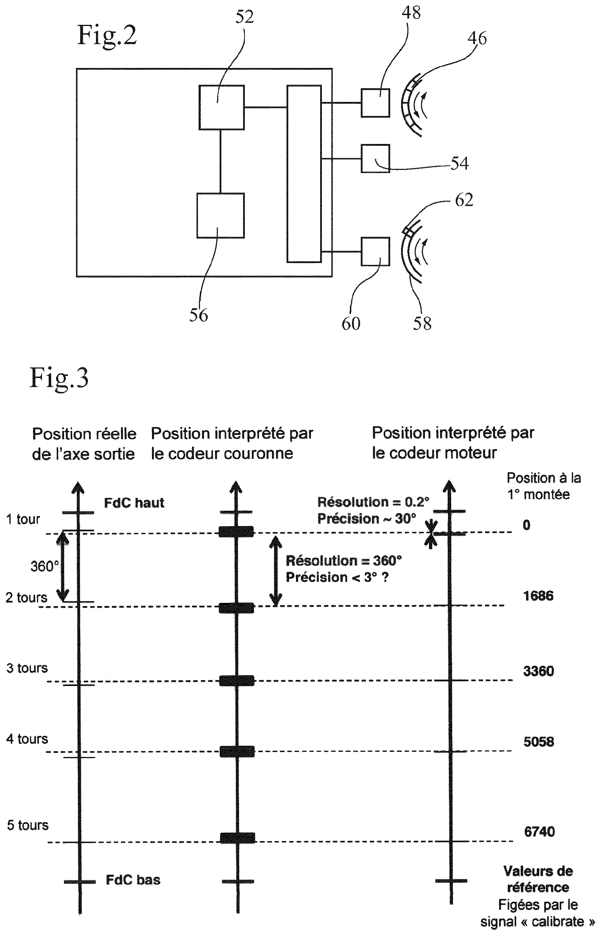

Le rotor **32.2** du moteur présente un ensemble annulaire multipolaire présentant un nombre élevé de pôles, par exemple au moins **16,** et de préférence au moins **32** pôles équi-répartis à sa circonférence, formant un premier codeur **46.** Alternativement le premier codeur est réalisé indépendamment du rotor au niveau d'un arbre de sortie du moteur tournant avec le rotor. Un premier capteur **48** peut être disposé à distance d'entrefer du codeur **46,** et relié à un support de circuit de commande **50** du moteur **32,** fixe par rapport au carter **36** du moteur, de manière à lire les changements d'états lors du défilement rotatif du codeur **46** devant le capteur **48.** Avantageusement le premier capteur **48** comprend deux détecteurs (non représentés), par exemple deux sondes à effet Hall ou deux interrupteurs Reed, placés de façon à ce que l'un et l'autre reçoivent une information magnétique s'alternant de manière distincte. Ainsi, l'analyse des signaux fournis par les deux détecteurs formant le premier capteur **48** permet de repérer les variations de position ainsi que le sens de rotation. Le premier capteur **48** et le premier codeur **46** forment avec le circuit de commande **50** un premier ensemble de mesure **51** de rotation du rotor **32.2.** Le circuit de commande **50,** illustré sur la figure **2****,** comporte notamment un étage de conditionnement du signal, par exemple pour construire à partir du signal analogique périodique délivré par le capteur **48** un signal binaire présentant une ou plusieurs impulsions par période du signal analogique. Un compteur d'impulsions **52** compte les impulsions résultantes de façon continue. Le circuit de commande est également équipé d'un moyen de détection **54** de la direction de rotation du rotor **32.2** du moteur, qui peut ou non faire appel au premier codeur **46** et au premier capteur **48,** notamment des deux détecteurs du premier capteur. Le compteur **52** est incrémenté à chaque impulsion détectée dans un sens de rotation prédéterminé, et décrémenté à chaque impulsion dans le sens de rotation opposé. Le circuit de commande **50** accède ainsi à une information représentant le nombre de tours et de fraction de tour parcouru par le rotor du moteur relativement par exemple à une des positions de fin de course servant de position de référence pour laquelle le compteur est étalonné à 0. Le circuit de commande **50** possède en outre une mémoire **56** contenant des valeurs d'étalonnage du compteur, comme il sera expliqué plus loin.

De façon similaire, un deuxième codeur **58** est intégré à la partie tournante du palier **18** de support du tambour **14,** en face d'un deuxième capteur **60** fixé au support tubulaire **22** et relié au circuit de commande **50.** Le deuxième codeur **58** peut ne comporter qu'une singularité **62,** de manière à indexer une position angulaire du tambour **14.** Le deuxième codeur **58** et le deuxième capteur **60** forment un deuxième ensemble de mesure **64.** Le deuxième capteur **60** peut ne comporter qu'un seul détecteur, le sens de rotation étant indifférent. Le codeur **58** est par exemple un capteur unipolaire ou bipolaire inséré dans un espace en queue d'aronde sur la périphérie extérieure du palier **18.** Le deuxième capteur est installé sur un circuit imprimé interne au support tubulaire fixe **22.**

On a représenté sur la figure **3** de gauche à droite :
- la position réelle du tambour entre une position de fin de course haute et une position de fin de course basse,
- les impulsions correspondantes vues par le deuxième capteur à raison d'une par tour,
- la valeur de la position du rotor du moteur lue en sortie du compteur au moment de l'impulsion vue par le deuxième capteur.

Sur la table 1 suivante, on a reporté sur la deuxième ligne les valeurs de la position du rotor **32.** du moteur lues au moment où le circuit de commande détecte le passage du tambour **14** par la position indexée, enregistrées lors d'une phase d'étalonnage de l'appareillage en entraînant le tambour **14** depuis la position de fin de course basse jusqu'à la position de fin de course haute, sur cinq tours. Cette phase d'étalonnage est signalée par un message spécifique à l'actionneur. Elle a lieu en principe à la première installation ou en cas de re-réglage des fins de course. En cas de re-réglage d'un actionneur ayant déjà subi une déformation de type fluage, cette phase d'étalonnage prend en compte les déformations existantes et le procédé mis en oeuvre permet de prendre en compte les déformations additionnelles qui peuvent avoir lieu par la suite dans la vie du produit. Dans tous les cas, cette phase d'étalonnage permet de prendre en compte les effets de la charge selon la position et les observations sur les phases suivantes permettront de déduire uniquement les variations par rapport à une situation de référence, uniquement liées aux déformations dans l'actionneur.

Ainsi, un actionneur en charge peut être déformé suivant un angle maximum de 30° (déformation permanente en charge peur un couple supérieur à 6Nm), tandis qu'une précision de +/- 2° ou 3° est equise dans le domaine d'application.

**Table 1**

| Tour | 0 | 1 | 2 | 3 | 4 | Décalage |
|---|---|---|---|---|---|---|
| Valeur de référence | 0 | 1686 | 3360 | 5058 | 6740 | - |
| Phase d'observation n°1 | 2 | 1690 | 3365 | 5060 | 6742 | +3 |
| Phase d'observation n°N | -2 | 1687 | 3363 | 5062 | 6739 | +1 |

Sur une troisième ligne de cette table 1, on a reporté les valeurs de la position du rotor **32.2** du moteur lues au cours d'une première phase d'observation alors que le tambour **14** tourne dans le sens de la montée sur plus d'un tour, et de préférence sur l'ensemble de la course entre la position de fin de course basse et la position de fin de course haute. En dernière colonne, pour cette troisième ligne, on a indiqué la moyenne des différences observées entre les lectures lors de la phase d'observation et les valeurs lues dans la phase d'étalonnage.

Sur une quatrième ligne, on a procédé de même, pour une autre phase d'observation, dans les mêmes conditions de montée. Les phases d'étalonnages se font de préférence dans le sens de la montée, l'écran étant en charge par rapport au moteur et la rotation du palier étant de ce fait plus régulière. A la descente, on peut parfois observer des phénomènes d'à-coups (ou jumping en anglais) qui risquent de fausser les mesures. Toutefois, le procédé a vocation à s'appliquer pour les deux sens de déplacement.

Au cours de chaque phase d'observation, le circuit de commande détermine l'écart par rapport au contenu de la mémoire d'étalonnage pour une ou plusieurs impulsions correspondantes vues par le deuxième capteur, et en déduit une correction à effectuer sur chacune des impulsions. Le compteur de position sera ainsi ajusté par rapport au décalage observé. Alternativement, une moyenne des décalages sur une phase d'observation peut être construite et l'ajustement du compteur réalisé à la fin de la phase d'observation. Le décalage observé pour chaque impulsion donne une mesure du fluage ou de déviation du réducteur.

Naturellement, diverses modifications peuvent être envisagées.

En particulier, divers algorithmes peuvent être envisagés pour tirer parti de la donnée de position indexée. En particulier, le recalage à chaque impulsion devra être fait dans une plage de valeurs raisonnables. Ainsi, pour éviter que des interventions extérieures, par exemple des obstacles, ne soient considérés comme des déformations de l'actionneur, on exclura certaines valeurs incohérentes de décalage. Le nombre, le positionnement et la constitution des éléments souples amortisseurs peuvent être choisis librement en fonction de l'application envisagée.

Les ensembles de mesure pour la détection précise de la rotation du rotor, pour la détection de la direction de rotation et pour la détection de la position indexée du tambour **14** peuvent être de tous type. En particulier, l'utilisation d'un aimant bipolaire au niveau du palier permet une détection de passage plus franche (il est alors possible de détecter une transition entre deux états), mais les effets d'hystérésis conduiront à devoir vérifier le sens de rotation avant d'interpréter tout signal du deuxième capteur. Dans le cas d'un codeur unipolaire, la détection se fera sur l'activation d'un seuil. Là encore, il sera possible de mémoriser des valeurs différentes pour un même passage, mais dans deux sens différents.

Le circuit de commande **50** peut être fixé indifféremment au carter **36,** au tube fixe **22,** voire au support fixe **23.**

L'ensemble motoréducteur **30** n'est pas nécessairement logé dans le tube **22.** Le deuxième support fixe **26** peut être omis.

Les positions de fin de course peuvent ou non correspondre à des limitations matérielles de la course de l'écran. Il peut s'agir notamment de positions de référence ou de positions préférées prédéterminées.

Il peut être envisagé de remplacer les valeurs d'étalonnage par les valeurs observées lors de la ou des phases d'observation précédentes, par exemple en utilisant des moyennes glissantes, de façon à conférer à l'appareillage une capacité d'apprentissage permanent.

Le procédé sera appliquer en particulier à des installations dont l'écran est mobile sur plus de deux tours ou pour des actionneurs dont le couple à fournir est supérieur ou égal à 6Nm. En deçà, le couple à appliquer est faible et la déformation par fluage est négligeable.

On pourra également mettre à profit la comparaison entre les signaux délivrés par le premier capteur au passage de la singularité détectée par le deuxième capteur pour détecter la présence d'un obstacle, ou proposer une estimation du couple résistant sur le tambour.

## Revendications

1. Appareillage d'enroulement (10) d'un écran (12), comportant
- un tambour (14) d'enroulement de l'écran (12), tournant autour d'un axe de rotation (16) par rapport à un référentiel fixe sur plus d'un tour entre au moins une première position de fin de course et une deuxième position de fin de course ;
- un ensemble moteur (30) comprenant un moteur (32) muni d'un stator (32.1) destiné à être fixé à un support fixe (23, 26) et un rotor (32.2) lié cinématiquement au tambour d'enroulement (14) ; et
- un premier ensemble de mesure (51) comportant un premier codeur (46) solidaire du rotor (32.2) et un premier capteur pour lire le premier codeur (46) et générer un premier signal de comptage lorsque le premier codeur (46) tourne ; et des premiers moyens de traitement (50) pour générer en fonction du premier signal de comptage un premier signal indicatif de la position de l'écran, monotone lorsque le tambour passe de la première position de fin de course à la deuxième position de fin de course ;
**caractérisé en ce qu'**il comporte en outre
- un deuxième ensemble de mesure (64) pour détecter au moins une position indexée du tambour (14) par tour de tambour dans le référentiel fixe,
- une mémoire d'étalonnage (56) pour mémoriser au moins une première valeur d'étalonnage du premier signal indicatif de la position de l'écran dans la position indexée du tambour ;
- un comparateur pour délivrer au moins une première comparaison algébrique quantitative entre une valeur courante du premier signal indicatif de la position de l'écran mesurée au passage par la position indexée durant une phase d'observation et la première valeur d'étalonnage.

2. Appareillage selon la revendication 1, **caractérisé en ce que** le deuxième ensemble de mesure (64) comporte un deuxième codeur (58) solidaire du tambour (14), un deuxième capteur (60) fixe dans le référentiel fixe pour lire le deuxième codeur (58), et des deuxièmes moyens de traitement pour générer un deuxième signal représentatif d'un passage par la position indexée lorsque le deuxième codeur tourne avec le tambour.

3. Appareillage selon la revendication précédente, **caractérisé en ce que** le deuxième codeur (58) présente au plus huit singularités, et de préférence une singularité unique (62), lisible par le deuxième capteur (60) à chaque tour de tambour.

4. Appareillage selon l'une quelconque des revendications 2 à 3, **caractérisé en ce que** le tambour (14) est guidé par rapport au support fixe (23, 26) par l'intermédiaire d'au moins un palier de guidage (18, 20), le deuxième codeur (58) étant disposé sur une pièce tournante du palier (18).

5. Appareillage selon l'une quelconque des revendications précédentes, **caractérisé en ce que** l'ensemble moteur (30) comporte au moins un réducteur de vitesse (34) entre le rotor (32.2) et le tambour (14).

6. Appareillage selon l'une quelconque des revendications précédentes, **caractérisé en ce que** l'appareillage comporte au moins un amortisseur de vibration tournant (44) disposé entre le rotor (32.2) et le tambour (14).

7. Appareillage selon l'une quelconque des revendications précédentes, **caractérisé en ce que** l'appareillage comporte au moins un amortisseur de vibration fixe (38) disposé entre le stator (32.1) et le support fixe (24).

8. Appareillage selon l'une quelconque des revendications précédentes, **caractérisé en ce que** l'ensemble moteur (30) comporte un carter (36) logé dans un tube (22) monté fixe sur le support fixe (24).

9. Appareillage selon l'une quelconque des revendications précédentes, **caractérisé en ce que** le deuxième ensemble de mesure (64) comprend un capteur bipolaire et le deuxième codeur détermine un changement de polarité.

10. Appareillage selon l'une quelconque des revendications précédentes, **caractérisé en ce que** le comparateur comporte des moyens pour générer une valeur de décalage fonction au moins de la première comparaison algébrique.

11. Appareillage selon la revendication précédente, **caractérisé en ce qu'**il comporte en outre un contrôleur pour piloter le moteur dans une phase ultérieure en fonction au moins d'une valeur courante du premier signal indicatif de la position de l'écran mesurée dans la phase ultérieure et de la valeur de décalage.

12. Appareillage selon l'une quelconque des revendications 10 ou 11, **caractérisé en ce que** le comparateur génère la valeur de décalage en fonction de plusieurs comparaisons algébriques entre plusieurs valeurs courantes du premier signal indicatif de la position de l'écran mesurées au passage par la position indexée dans une phase d'observation et plusieurs valeurs d'étalonnage mémorisées dans la mémoire d'étalonnage.

13. Procédé de commande d'un appareillage d'enroulement (10) d'un écran (12), comportant un tambour (14) d'enroulement de l'écran (12), entraîné par un rotor (40) d'un moteur (32), le procédé étant **caractérisé par** les étapes suivantes :
- dans une phase d'étalonnage, on mémorise au moins une valeur d'étalonnage d'un angle de rotation correspondant à une position indexée du tambour ;
- dans une phase d'observation, on entraîne le tambour en rotation à l'aide du moteur en mesurant une valeur courante de l'angle de rotation du rotor du moteur et en détectant le passage du tambour par la position indexée, et on effectue au moins une comparaison quantitative entre la valeur courante lorsque le tambour passe par la position indexée et la valeur d'étalonnage.

14. Procédé selon la revendication 13, **caractérisé en ce que** dans la phase d'étalonnage, on entraîne le tambour (14) avec le moteur (32) entre une première position de fin de course et une deuxième position de fin de course dans un sens de rotation de référence et on mémorise autant de valeurs d'étalonnage qu'il y a de passages du tambour par la position indexée.

15. Procédé selon la revendication 14, **caractérisé en ce que** dans la phase d'observation, on entraîne le tambour en rotation dans le sens de référence, et on effectue autant de comparaisons quantitatives entre la valeur courante lorsque le tambour passe par la position indexée et la valeur d'étalonnage qu'il y a de passage du tambour par la position indexée.

16. Procédé selon la revendication précédente, **caractérisé en ce que** l'on détermine une valeur de décalage sur un tour ou plus d'un tour de rotation du tambour (14), en fonction de plusieurs desdites comparaisons.

17. Procédé selon l'une quelconque des revendications 13 à 16, **caractérisé en ce qu'**une nouvelle valeur de position du moteur est déterminée à chaque passage par une position indexée en fonction d'une valeur courante du premier signal indicatif de la position de l'écran mesurée et de la valeur de décalage déterminée dans la phase d'observation pour une ou plusieurs positions indexées.

## Patentansprüche

1. Vorrichtung (10) zur Schirmwicklung (12), umfassend:
- eine Trommel (14) zur Schirmwicklung (12), die sich relativ zu einem über mehrere Rotationen hinweg festen Bezugspunkt um eine Rotationsachse (16) zwischen mindestens einer ersten Endposition und einer zweiten Endposition dreht;
- eine Motoreinheit (30), umfassend einen Motor (32) mit einem Stator (32.1) zur Befestigung auf einem festen Träger (23, 26) und einem Rotor (32.2), der kinematisch mit der Trommel (14) verbunden ist; und
- eine erste Messeinrichtung (51), umfassend einen ersten Codierer (46), der mit dem Rotor (32.2) integriert ist, und einen ersten Sensor zum Ablesen des ersten Codierers (46) und zum Erzeugen eines ersten Zählsignals, während sich der erste Codierer (46) dreht; und erste Verarbeitungsmittel (50) zur Erzeugung eines ersten Signals, aus dem die Position des Schirms hervorgeht, auf der Grundlage des ersten Zählsignals, wobei das erste Signal eintönig ist, wenn die Trommel von der ersten Endoposition in die zweite Endposition übergeht;
**dadurch gekennzeichnet, dass** sie ferner umfasst:
- eine zweite Messeinrichtung (64) zur Erkennung mindestens einer indexierten Position der Trommel (14) pro Rotation der Trommel um den festen Bezugspunkt,
- einen Eichspeicher (56) zur Speicherung mindestens eines ersten Eichwerts des ersten Signals, aus dem die Position des Schirms hervorgeht, in der indexierten Position der Trommel;
- einen Komparator zur Erzeugung mindestens eines ersten quantitativen algebraischen Vergleichs zwischen einem Ist-Wert des ersten Signals, aus dem die in einer Beobachtungsphase beim Durchlaufen der indexierten Position gemessene Position des Schirms hervorgeht, und dem ersten Eichwert.

2. Vorrichtung nach Anspruch 1, **dadurch gekennzeichnet, dass** die zweite Messeinrichtung (64) einen zweiten Codierer (58), der mit der Trommel (14) integriert ist, einen zweiten ortsfesten Sensor (60) am ersten festen Bezugspunkt zum Ablesen des zweiten Codierers (58), und zweite Verarbeitungsmittel zur Erzeugung eines zweiten Signals, das einen Durchlauf durch die indexierte Position, während sich der zweite Codierer mit der Trommel dreht, darstellt, umfasst.

3. Vorrichtung nach dem vorstehenden Anspruch, **dadurch gekennzeichnet, dass** der zweite Codierer (58) höchstens acht Singularitäten, vorzugsweise eine einzige Singularität (62), aufweist, die bei jeder Rotation der Trommel durch den zweiten Sensor (60) lesbar sind.

4. Vorrichtung nach einem der Ansprüche 2 bis 3, **dadurch gekennzeichnet, dass** die Trommel (14) relativ zum festen Träger (23, 26) mittels mindestens eines Führungslagers (18, 20) geführt wird, wobei der zweite Codierer (58) auf einem rotierenden Teil des Lagers (18) angeordnet ist.

5. Vorrichtung nach einem der vorstehenden Ansprüche, **dadurch gekennzeichnet, dass** die Motoreinheit (30) mindestens ein Untersetzungsgetriebe (34) zwischen dem Rotor (32.2) und der Trommel (14) umfasst.

6. Vorrichtung nach einem der vorstehenden Ansprüche, **dadurch gekennzeichnet, dass** die Vorrichtung mindestens einen zwischen dem Rotor (32.2) und der Trommel (14) angeordneten rotierenden Schwingungsdampfer (44) umfasst.

7. Vorrichtung nach einem der vorstehenden Ansprüche, **dadurch gekennzeichnet, dass** die Vorrichtung mindestens einen zwischen dem Stator (32.1) und dem ortsfesten Träger (24) angeordneten ortsfesten Schwingungsdampfer (38) umfasst.

8. Vorrichtung nach einem der vorstehenden Ansprüche, **dadurch gekennzeichnet, dass** die Motoreinheit (30) mindestens ein in einer ortsfest (22) auf dem ortsfesten Träger (24) montierten Röhre angeordnetes Kurbelgehäuse (36) umfasst.

9. Vorrichtung nach einem der vorstehenden Ansprüche, **dadurch gekennzeichnet, dass** die zweite Messeinrichtung (64) einen bipolaren Sensor umfasst und der zweite Codierer einen Polaritätswechsel bestimmt.

10. Vorrichtung nach einem der vorstehenden Ansprüche, **dadurch gekennzeichnet, dass** der Komparator Mittel zur Erzeugung mindestens eines Versatzwerts anhand mindestens des ersten algebraischen Vergleichs umfasst.

11. Vorrichtung nach dem vorstehenden Anspruch, **dadurch gekennzeichnet, dass** sie ferner eine Steuerung zur Steuerung des Motors in einer weiteren Phase auf der Grundlage mindestens eines Ist-Werts des ersten Signals, aus dem die in der weiteren Phase gemessene Position des Schirms und der Versatzwert hervorgehen, umfasst.

12. Vorrichtung nach einem der Ansprüche 10 oder 11, **dadurch gekennzeichnet, dass** der Komparator den Eichwert anhand mehrerer algebraischer Vergleiche zwischen mehreren Ist-Werten des ersten Signals, aus dem die in einer Beobachtungsphase beim Durchlauf durch die indexierte Position gemessene Position des Schirms hervorgeht, und mehreren im Eichspeicher gespeicherten Eichwerten erzeugt.

13. Verfahren zur Steuerung einer Vorrichtung (10) zur Schirmwicklung (12), umfassend eine Trommel (14) zur Wicklung des Schirms (12), die durch einen Rotor (40) eines Motors (32) angetrieben wird, wobei das Verfahren durch die nachfolgenden Schritte gekennzeichnet ist:
- Speichern mindestens eines Eichwerts eines Drehwinkels, der einer indexierten Position der Trommel entspricht, in einem Eichschritt;
- Rotieren der Trommel mithilfe eines Motors unter Messung eines Ist-Werts des Drehwinkels des Rotors des Motors und Erkennung des Durchlaufs der Trommel anhand der indexierten Position, und Vornehmen mindestens eines quantitativen Vergleichs zwischen dem Ist-Wert beim Durchlauf der Trommel durch die indexierte Position und dem Eichwert in einem Beobachtungsschritt.

14. Verfahren nach Anspruch 13, **dadurch gekennzeichnet, dass** im Eichschritt die Trommel (14) mit dem Motor (32) zwischen einer ersten Endposition und einer zweiten Endposition in einer Bezugsdrehrichtung angetrieben wird, und einen Eichwert je Durchlauf der Trommel durch die indexierte Position gespeichert wird.

15. Verfahren nach Anspruch 14, **dadurch gekennzeichnet, dass** im Beobachtungsschritt die Trommel in der Bezugsrichtung rotiert wird und je Durchlauf der Trommel durch die indexierte Position ein quantitativer Vergleich zwischen dem Ist-Wert und dem Eichwert vorgenommen wird.

16. Verfahren nach dem vorstehenden Anspruch, **dadurch gekennzeichnet, dass** ein Eichwert aus mindestens einer Umdrehung der Trommel (14) anhand mehrerer der vorgenannten Vergleiche bestimmt wird.

17. Verfahren nach einem der Ansprüche 13 bis 16, **dadurch gekennzeichnet, dass** ein neuer Positionswert des Motors bei jedem Durchlauf durch eine indexierte Position aufgrund eines Ist-Werts des ersten Signals, aus dem die gemessene Position des Schirms hervorgeht, und des im Beobachtungsschritt für eine oder mehrere indexierte Positionen bestimmten Eichwerts bestimmt wird.

## Claims

1. A winding device (10) for a screen (12), including
- a winding drum (14) for winding the screen (12), which can rotate around an axis of rotation (16) with respect to a stationary frame of reference over more than one revolution between at least one first end-of-travel position and a second end-of-travel position;
- a motor assembly (30) comprising a motor (32) equipped with a stator (32.1) intended to be fixed to a stationary support (23, 26) and a rotor (32.2) kinematically connected to the winding drum (14); and
- a first measurement assembly (51) comprising a first encoder (46) secured to the rotor (32.2), a first sensor for reading the first encoder (46) and generating a first counting signal when the first encoder (46) turns; and first processing means (50) generating, as a function of the first counting signal, a first signal indicative of the position of the screen, the first signal being monotonic when the drum moves from the first end-of-travel position to the second end-of-travel position;
**characterized in that** it further includes
- a second measurement assembly (64) for detecting at least one indexed position of the drum (14) per revolution of the drum in the fixed frame of reference,
- a calibration memory (56) for storing at least one first calibration value for the first signal indicative of the position of the screen in the indexed position of the drum; and
- a comparator for delivering at least one first quantitative algebraic comparison between a current value of the first signal indicative of the position of the screen as measured on passing through the indexed position during an observation phase and the first calibration value.

2. The device according to claim 1, **characterized in that** the second measuring assembly (64) includes a second encoder (58) secured to the drum (14), a second stationary sensor (60) in the stationary frame of reference to read the second encoder (58), and second processing means to generate a second signal representative of a passage by the indexed position when the second encoder rotates with the drum.

3. The device according to the preceding claim, **characterized in that** the second encoder (58) has no more than eight singularities, and preferably one singularity (62), readable by the second sensor (60) upon each drum revolution.

4. The device according to any one of claims 2 to 3, **characterized in that** the drum (14) is guided relative to the stationary support (23, 26) by means of at least one guide bearing (18, 20), the second encoder (58) being positioned on a rotating part of the bearing (18).

5. The device according to any one of the preceding claims, **characterized in that** the motor assembly (30) includes at least one reduction gear (34) between the rotor (32.2) and the drum (14).

6. The device according to any one of the preceding claims, **characterized in that** the device includes at least one rotary vibration damper (44) positioned between the rotor (32.2) and the drum (14).

7. The device according to any one of the preceding claims, **characterized in that** the device includes at least one stationary vibration damper (38) positioned between the stator (32.1) and the stationary support (24).

8. The device according to any one of the preceding claims, **characterized in that** the motor assembly (30) includes a casing (36) housed in a tube (22) mounted stationary on the stationary support (24).

9. The device according to any one of the preceding claims, **characterized in that** the second measuring assembly (64) comprises a bipolar sensor and the second encoder determines a change in polarity.

10. The device according to any one of the preceding claims, **characterized in that** the comparator includes means for generating an offset value depending on at least the first algebraic comparison.

11. The device according to the preceding claim, **characterized in that** it further includes a controller for controlling the motor in a subsequent phase based on at least a current value of the first signal indicative of the position of the screen measured in the subsequent phase and the shift value.

12. The device according to any one of claims 10 or 11, **characterized in that** the comparator generates the shift value as a function of several algebraic comparisons between several current values of the first signal indicative of the position of the screen measured upon passage by the indexed position in an observation phase and several calibration values stored in the calibration memory.

13. A method for controlling a device (10) for winding a screen (12), including a winding drum (14) of the screen (12), driven by a rotor (40) of a motor (32), the method being **characterized by** the following steps:
- in a calibration phase, at least one calibration value of a rotation angle corresponding to an indexed position of the drum is stored;
- in an observation phase, the drum is rotated using the motor while measuring a current value of the rotation angle of the rotor of the motor and detecting the passage of the drum by the indexed position, and at least one quantitative comparison is done between the current value when the drum passes by the indexed position and the calibration value.

14. The method according to claim 13, **characterized in that** in the calibration phase, the drum (14) is driven with the motor (32) between a first end-of-travel position and a second end-of-travel position in a reference rotation direction and as many calibrations are stored as there are passages of the drum by the indexed position.

15. The method according to claim 14, **characterized in that** in the observation phase, the drum is rotated in the reference direction, and as many quantitative comparisons are done between the current value when the drum passes by the indexed position and the calibration value as there are passages of the drum by the indexed position.

16. The method according to the preceding claim, **characterized in that** a shift value is determined over one revolution or more than one revolution of the drum (14), based on several of said comparisons.

17. The method according to any one of claims 13 to 16, **characterized in that** a new position value of the motor is determined upon each passage by an indexed position as a function of the current value of the first signal indicative of the measured position of screen and the shift value determined in the observation phase for one or more indexed positions.
